# DEMANDE DE BREVET EUROPEEN

(11) **EP 1 033 269 A1**
(43) Date de publication de la demande: **06.09.2000**
(21) Numéro de dépôt: 00440060.2
(22) Date de dépôt: 29.02.2000
(51) Int. Cl.: B60H 1/34

(54) **Barillet d'aérateur pour véhicule automobile**

(30) Priorité: 02.03.1999 FR 9902842
(71) Demandeur: MGI COUTIER (S.A.), F-01410 Champfromier (FR)
(72) Inventeur: Caoduro, Jean-Paul, 68510 Sierentz (FR)
(74) Mandataire: Nithardt, Roland

(57) **Abrégé**

La présente invention concerne un barillet d'aérateur pourvu d'un premier jeu d'ailettes rideaux en façade et d'un second jeu d'ailettes pivotantes et faisant appel à une solution technique originale qui permet d'avoir accès au bouton de manoeuvre des ailettes pivotantes uniquement quand les ailettes rideaux sont en position ouverte totalement ou partiellement.

Le barillet d'aérateur (1) est caractérisé en ce que le bouton (9) de commande des ailettes pivotantes (5) associé à la barrette de liaison (7) est couplé à la molette (8) de commande des ailettes rideaux (4) au moyen d'un mécanisme de transmission (13) composé d'un levier intermédiaire (11), d'une came (12), d'un bras de transmission (14) et de la tige (91) dudit bouton (9). La rotation de la molette (8) permet de déplacer simultanément le bouton (9) entre deux positions extrêmes, une position rentrée où il est dissimulé par les ailettes rideaux (4) quand elles sont en position fermée et une position sortie où il est saillant par rapport auxdites ailettes rideaux (4) quand elles sont en position ouverte.

## Description

La présente invention concerne un barillet d'aérateur pour véhicule automobile comportant au moins un corps creux monté à la sortie d'un conduit d'air et débouchant dans l'habitacle du véhicule pour canaliser un flux d'air, un volet d'obturation dudit flux d'air monté pivotant transversalement dans ledit corps, un jeu d'ailettes rideaux disposé en façade et un jeu d'ailettes pivotantes disposé à l'arrière dudit jeu d'ailettes rideaux et orienté selon un angle différent, chaque jeu d'ailettes étant relié à une barrette de liaison couplée à un dispositif de commande spécifique.

Il est bien connu que dans un barillet d'aérateur chaque jeu d'ailettes est commandé par un dispositif de commande spécifique visible dans l'habitacle du véhicule, et plus particulièrement dans la planche de bord, et accessible par un occupant de ce véhicule dans le but de pouvoir modifier la directivité du flux d'air provenant d'un circuit d'aération. Etant donné que sont prévus habituellement deux jeux d'ailettes pivotantes décalés d'un angle de 90° pour assurer une directivité du flux d'air dans les directions généralement verticale et horizontale, sont également prévus deux boutons, molettes ou curseurs de manoeuvre.

Dans le cas d'un barillet d'aérateur équipé d'ailettes rideaux, c'est-à-dire d'ailettes agencées pour obturer totalement la façade dudit barillet, le bouton de manoeuvre de ces ailettes peut commander également l'ouverture et la fermeture du volet d'obturation disposé en amont, en fonction de la position de ces ailettes. Dans ce cas, le bouton de commande des ailettes pivotantes qui sont disposées à l'arrière des ailettes rideaux est prévu sur un des côtés disponibles du barillet et relié auxdites ailettes au moyen d'un système de transmission de mouvement par renvoi d'angle ou autres moyens complexes. Ce bouton reste donc toujours visible et accessible même quand il devient inutile, notamment quand les ailettes rideaux sont en position fermée.

Dans un but permanent de simplification des pièces entrant dans la composition des véhicules pour réduire leurs coûts de fabrication, de montage et d'entretien, et dans un but également permanent d'amélioration de l'esthétique des pièces entrant dans l'habitacle des véhicules, on a cherché à dissimuler le bouton de commande qui est inutile dans le cas où les ailettes rideaux sont fermées.

La présente invention propose par conséquent une solution technique originale qui permet d'avoir accès au bouton de manoeuvre des ailettes pivotantes uniquement quand les ailettes rideaux sont en position ouverte totalement ou partiellement.

Ce but est atteint par un barillet d'aération tel que défini en préambule et caractérisé en ce que le dispositif de commande des ailettes pivotantes comporte un bouton associé à la barrette de liaison correspondante et agencé pour avoir deux positions extrêmes, une position rentrée où il est dissimulé par les ailettes rideaux quand elles sont en position fermée et une position sortie où il est saillant par rapport auxdites ailettes rideaux quand elles sont en position ouverte.

Dans une forme de réalisation préférée de l'invention, le bouton comporte une tige couplée au dispositif de commande des ailettes rideaux au moyen d'un mécanisme de transmission de mouvement, cette tige étant couplée à la barrette de liaison.

De manière préférentielle, le mécanisme de transmission comporte une came solidaire en rotation avec l'axe du volet d'obturation et couplée au dispositif de commande des ailettes rideaux, ce mécanisme comportant également un bras de transmission solidaire en translation de la tige du bouton, ladite came et ledit bras étant couplés au moyen d'une liaison pivot.

Le dispositif de commande des ailettes rideaux peut comporter une molette montée en rotation dans ledit corps et couplée à ladite came par un levier intermédiaire.

Ce levier intermédiaire présente avantageusement une forme coudée et ses extrémités sont respectivement couplées à la molette et à ladite came au moyen d'une liaison pivot correspondante.

Le barillet d'aérateur selon l'invention peut comporter un déflecteur du flux d'air disposé dans ledit corps et pourvu d'un canal de guidage en translation pour ladite tige du bouton.

Par exemple, le déflecteur peut comporter deux nervures disposées symétriquement pour former ledit canal de guidage, ce canal comportant de préférence un tronçon rectiligne suivi d'un tronçon évasé en V.

Dans la forme de réalisation préférée, la tige du bouton est montée pivotante sur ledit bras de transmission.

De manière avantageuse, le mécanisme de transmission de mouvement est agencé pour générer une force de réaction passant par l'axe de la molette en cas de poussée exercée sur le bouton en position sortie.

La présente invention et ses avantages seront mieux compris dans la description suivante d'une forme de réalisation donnée à titre d'exemple non limitatif et en référence aux dessins annexés, dans lesquels :

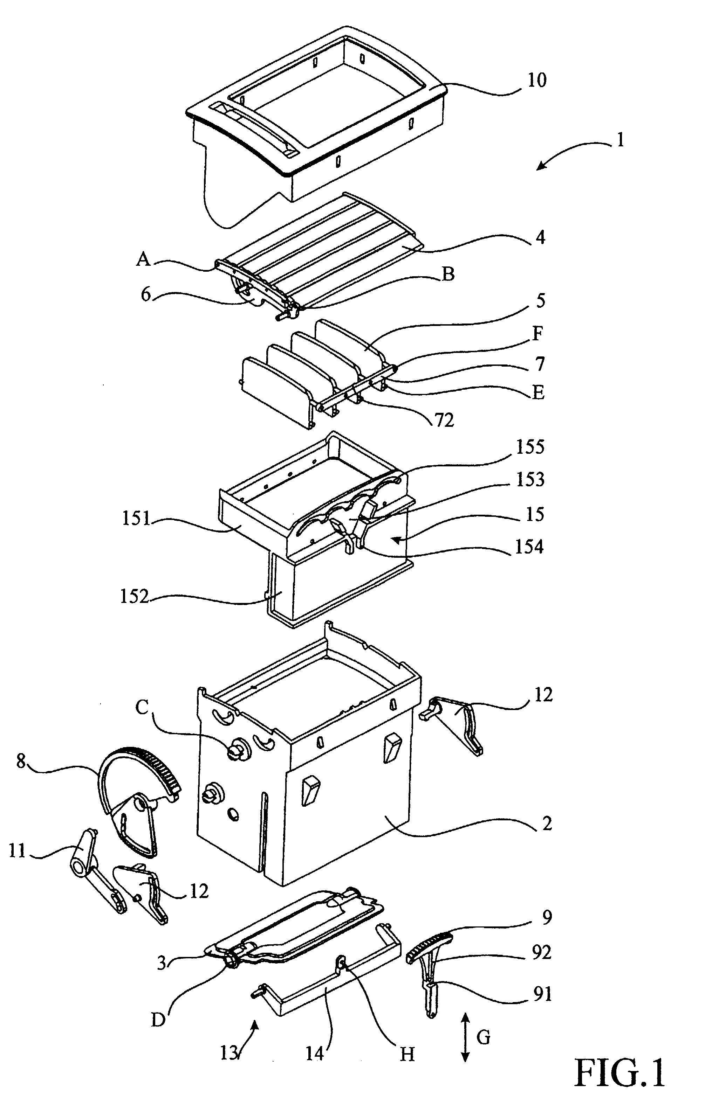

- la figure 1 est une vue éclatée du barillet d'aérateur selon l'invention,
- la figure 2 est une vue partielle en perspective du barillet de la figure 1,
- la figure 3 est une autre vue partielle en perspective dudit barillet,
- la figure 4 est une vue en plan dudit barillet, et
- les figures 5A à 5D sont des vues schématiques dudit barillet, les ailettes pivotantes étant représentées dans différentes positions.

En référence aux figures, le barillet d'aérateur 1 selon l'invention comporte un corps creux 2 monté à la sortie d'un conduit d'air (non représenté) et débouchant dans l'habitacle du véhicule (non représenté) pour canaliser un flux d'air, un volet d'obturation 3 dudit flux d'air monté pivotant transversalement dans ledit corps 2, un jeu d'ailettes rideaux 4 disposé en façade dudit barillet et un jeu d'ailettes pivotantes 5 disposé à l'arrière dudit jeu d'ailettes rideaux 4 et orienté selon un angle différent, chaque jeu d'ailettes étant relié à une barrette de liaison 6, 7 couplée à un dispositif de commande spécifique 8, 9. Ce barillet d'aérateur 1 est conçu pour être assemblé en un sous-ensemble fini prêt à être monté par exemple dans la planche de bord d'un véhicule par emboîtement. Il est terminé en façade par un cadre d'aspect 10.

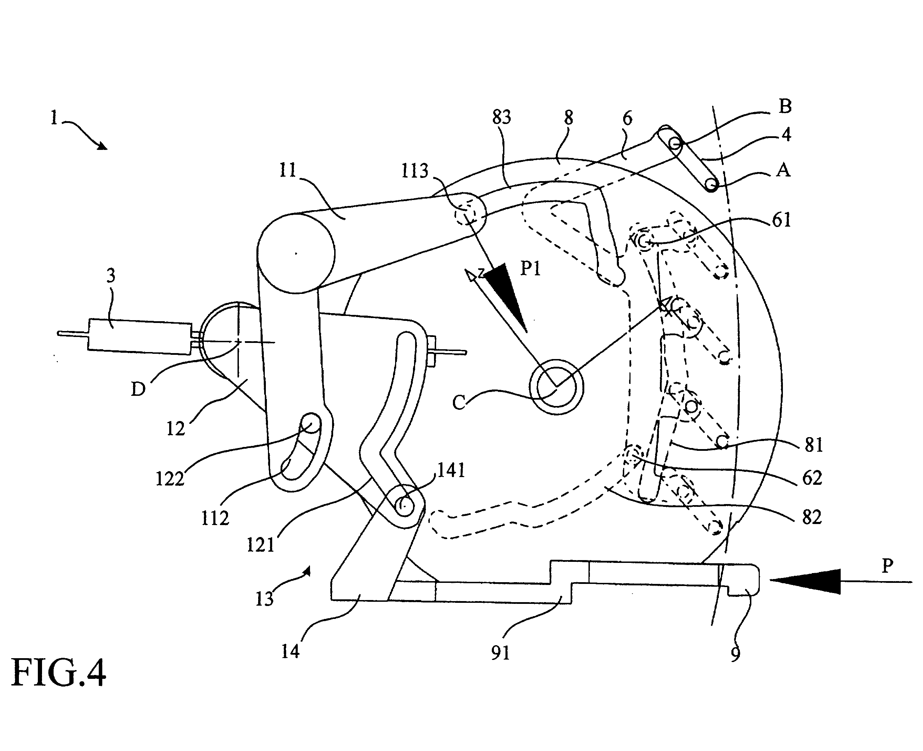

Les ailettes rideaux 4 sont de manière connue montées pivotantes dans ledit corps 2 autour d'axes de pivotement A fixes et parallèles entre eux. Elles sont reliées entre elles à une barrette de liaison 6 en des points de pivotement B distincts des axes A, qui leur assure un déplacement synchrone. Cette barrette de liaison 6 est couplée au dispositif de commande 8 correspondant qui est constitué dans cette réalisation d'une molette montée en rotation dans ledit corps autour d'un axe C, visible et accessible en façade. La molette de commande 8 transmet son mouvement de rotation à ladite barrette de liaison 6 au moyen d'une liaison pivot coulissant dans une rainure adaptée (cf. Fig. 4). Dans la présente réalisation, la molette 8 comporte deux rainures de guidage 81, 82 recevant chacune un pivot 61, 62 solidaire de ladite barrette de liaison 6, les pivots 61, 62 étant disposés aux extrémités de ladite barrette de liaison 6 pour lui assurer un guidage et un déplacement uniformes sans risque de blocage ou d'inversion de mouvement.

Cette molette 8 est également couplée au volet d'obturation 3 du conduit d'air par un levier intermédiaire 11 et une came 12 solidaire de l'axe de pivotement D du volet. Ce levier intermédiaire 11 présente une forme coudée et ses deux extrémités sont couplées respectivement à la molette 8 et à la came 12 par une liaison pivot coulissant dans une rainure. Dans cette réalisation, la liaison molette/levier est réalisée par une rainure 83 prévue dans la molette 8 et un pivot 113 prévu à l'extrémité correspondante du levier 11, mais l'inverse est également possible. De même, la liaison levier/came est réalisée par une rainure 112 dans le levier et un pivot 122 sur ladite came, mais l'inverse est également possible. La forme spécifique en L de la rainure 83 prévue dans la molette 8 permet de verrouiller le volet 3 dans sa position fermée.

Les ailettes pivotantes 5 qui sont disposées à l'arrière des ailettes rideaux 4 sont de manière connue montées pivotantes dans ledit corps autour d'axes de pivotement E fixes et parallèles entre eux. Elles sont reliées entre elles à une barrette de liaison 7 en des points de pivotement F distincts des axes E, qui leur assure un déplacement synchrone. Cette barrette de liaison 7 est couplée au dispositif de commande 9 correspondant qui est constitué dans cette réalisation d'un bouton pourvu d'une tige 91 montée en translation dans ledit corps 2 selon la flèche G entre deux positions extrêmes, une position rentrée où le bouton 9 est dissimulé par les ailettes rideaux 4 quand elles sont en position fermée et une position sortie où le bouton 9 est saillant par rapport auxdites ailettes rideaux 4 quand elles sont en position ouverte. La tige 91 du bouton est commandée en translation par la molette de commande 8 des ailettes rideaux 4 au moyen d'un mécanisme de transmission de mouvement 13.

Ce mécanisme de transmission de mouvement 13 comporte ladite came 12 décrite précédemment qui est solidaire de l'axe D du volet d'obturation 3 ainsi qu'un bras de transmission 14 solidaire de la tige 91 du bouton 9. La came 12 est couplée audit bras 14 par une liaison pivot coulissant dans une rainure. Dans cette réalisation, la rainure 121 est prévue dans la came 12 et le pivot 141 sur le bras de transmission 14, mais l'inverse est également possible. Cette liaison pivot est doublée dans la présente réalisation à l'extrémité opposée dudit bras de transmission 14 pour garantir un bon guidage et un fonctionnement sans blocage intempestif. La rainure 121 comporte un secteur courbe de rayon constant par rapport à l'axe de pivotement D du volet 3 suivi d'un secteur rectiligne s'éloignant rapidement dudit axe D. Le secteur courbe génère le déplacement du bouton 9 entre ses deux positions extrêmes rentrée et sortie et le secteur rectiligne tend à verrouiller le bouton 9 dans sa position sortie. Comme le montre la figure 4, si une force de poussée P est appliquée sur le bouton 9, il se crée une force de réaction P1 appliquée sur la molette 8, cette force P1 passant par l'axe de rotation C de ladite molette, cette dernière ne subit aucun couple de rotation. Il est donc impossible de faire rentrer le bouton 9 de cette manière.

Le barillet d'aérateur 1 comporte également un déflecteur 15 du flux d'air disposé dans le corps 2 entre le volet 3 et les ailettes pivotantes 4. Il comporte un cadre 151 pour recevoir le jeu d'ailettes pivotantes 4, ce cadre ayant des orifices pour recevoir les pivots correspondants desdites ailettes formant les axes de pivotement E. Il se prolonge d'un côté par une partie 152 formant le déflecteur proprement dit. Sur cette même partie 152, est ménagé un canal de guidage 153 destiné à guider en translation ladite tige 91 du bouton 9. Ce canal est délimité par deux nervures 154 disposées symétriquement et formant un premier tronçon rectiligne. Cette tige 91 est également guidée en translation dans la barrette de liaison 7 des ailettes pivotantes 5 au moyen d'une liaison pivot coulissant dans une rainure correspondante. Dans cette réalisation, la rainure 92 est prévue dans la tige 91 et le pivot 72 sur la barrette de liaison 7. Cette tige 91 est également montée pivotante sur ledit bras de transmission 14 autour d'un axe de pivotement H autorisant ainsi son débattement angulaire permettant de régler la position angulaire desdites ailettes 5. A cet effet, les nervures 154 prévues sur le déflecteur 15 forment à la suite du tronçon rectiligne un tronçon évasé en V délimitant le débattement angulaire du bouton 9. Le déflecteur 15 comporte également du côté du canal de guidage 153 une rainure ondulée 155 destinée au passage des pivots correspondants des ailettes pivotantes 5 formant les axes de pivotement F avec la barrette de liaison 7.

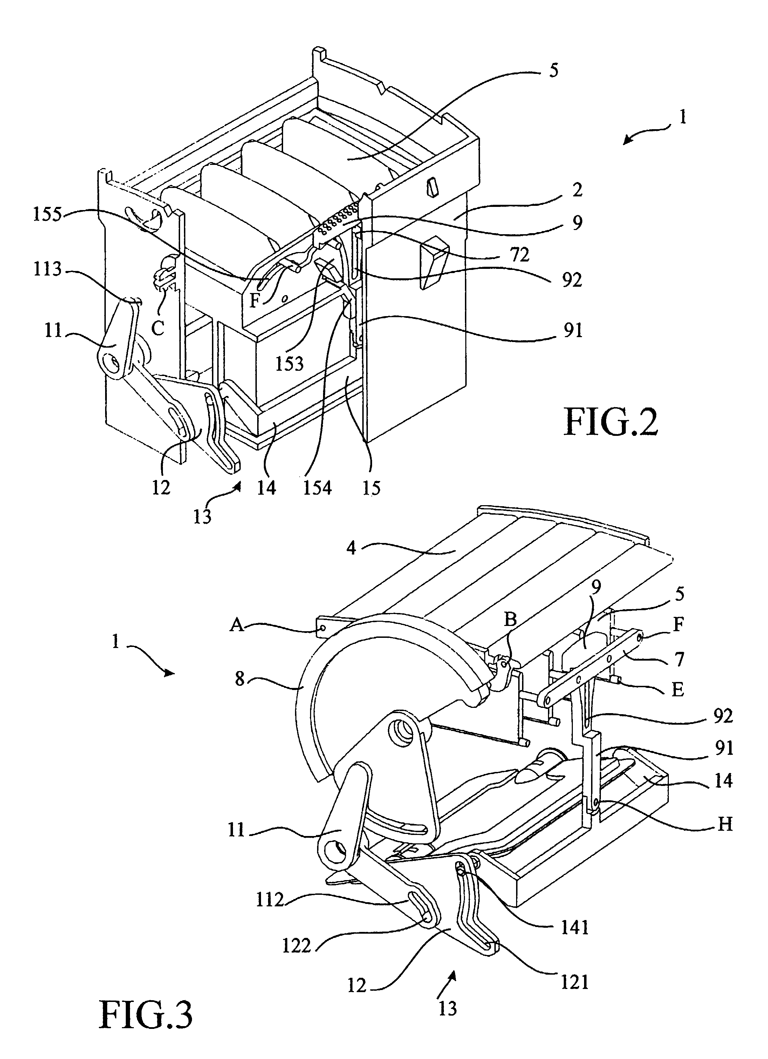

La figure 2 illustre le barillet d'aérateur 1 en perspective, le corps 2 étant partiellement coupé et les ailettes rideaux 4 n'étant pas représentées. On aperçoit clairement le mécanisme de transmission de mouvement 13 constitué du bouton 9, du bras de transmission 14 et de la came 12, de même que le déflecteur 15 avec son canal de guidage 153 pour la tige 91 dudit bouton 9 et la rainure 155 pour le guidage des axes de pivotement F des ailettes pivotantes 5.

La figure 3 représente également le barillet d'aérateur 1 en perspective mais sans le corps 2 ni le déflecteur 15, dans le but de montrer clairement le mécanisme de transmission de mouvement 13 et celui des ailettes rideaux 4 et du volet d'obturation 3.

La figure 4 représente une vue en plan de ce barillet d'aérateur 1 selon la figure 3, sans corps 2 et sans déflecteur 15, pour montrer clairement les différentes liaisons entre les différentes pièces.

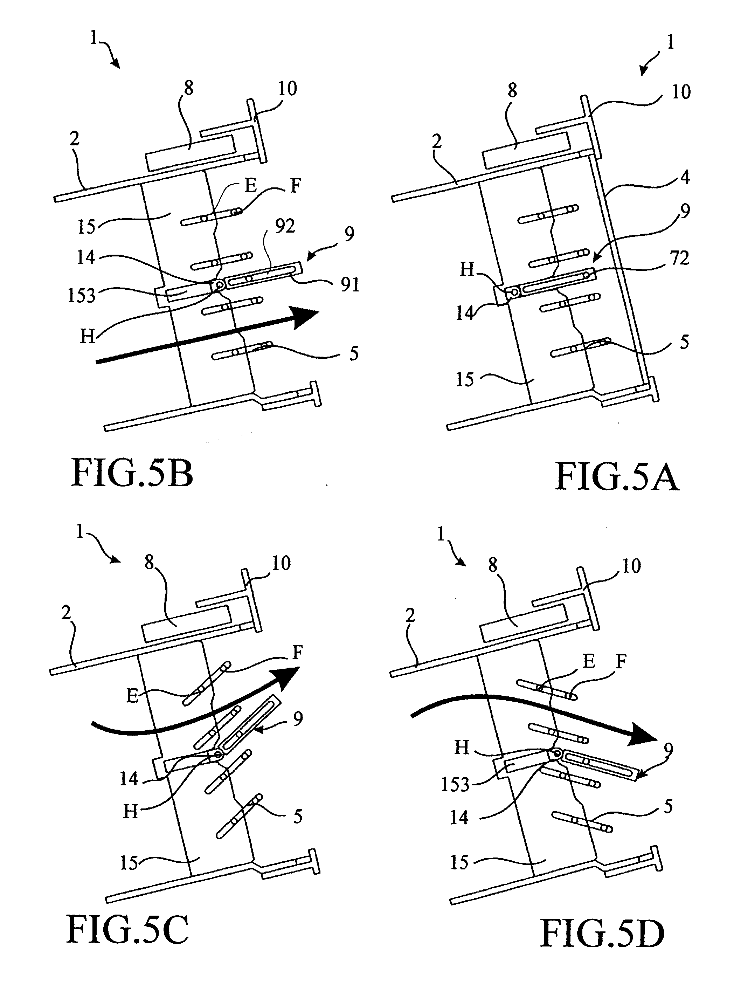

Les figures 5A à 5B illustrent schématiquement le barillet d'aérateur 1 dans différentes positions. La figure 5A correspond au barillet d'aérateur 1 totalement fermé, les ailettes rideaux 4 obturant la face avant du barillet et le bouton 9 étant en position rentrée. La figure 5B correspond au barillet d'aérateur 1 totalement ouvert, les ailettes rideaux n'étant pas représentées pour une question de clarté, le bouton 9 étant en position sortie, le flux d'air étant parallèle à l'axe dudit barillet. La figure 5C correspond au barillet de la figure 5B, le bouton 9 ayant été déplacé angulairement vers le haut, les ailettes pivotantes 5 ayant suivi le même mouvement et le flux d'air étant dévié dans la même direction. La figure 5D correspond au barillet de la figure 5B, le bouton 9 ayant été déplacé angulairement vers le bas, les ailettes pivotantes 5 ayant suivi le même mouvement et le flux d'air étant dévié dans la même direction.

Le fonctionnement du barillet d'aérateur 1 selon l'invention est très simple. En position fermée telle qu'illustrée par la figure 5A, le barillet d'aérateur 1 ne laisse passer aucun flux d'air. Le volet 3 obture le conduit d'air et les ailettes rideaux 4 obturent la face avant du barillet. Cette double obturation évite les risques de fuites d'air donc les nuisances sonores.

Pour ouvrir le barillet d'aérateur 1, comme illustré par la figure 5B par exemple, l'opérateur tourne plus ou moins la molette 8, qui va simultanément ouvrir le volet d'obturation 3, les ailettes rideaux 4 et faire sortir le bouton 9 pour la commande des ailettes pivotantes 5. La molette 8 en tournant déplace parallèlement la barrette de liaison 6 des ailettes rideaux 4 par les liaisons rainures/pivots 61, 81 et 62, 82. Elle entraîne aussi le levier intermédiaire 11 en rotation par la liaison rainure/pivot 83, 113 qui répercute ce mouvement de rotation sur la came 12 par la liaison rainure/pivot 112, 122. Cette came 12 est solidaire de l'axe de rotation D du volet d'obturation 3, ce dernier tourne également, sa course étant limitée à 1/4 de tour. Cette came 12 étant couplée au bras de transmission 14 par une liaison rainure/pivot 121, 141, le déplace en translation, entraînant avec lui la tige 91 du bouton 9. Nous rappelons que le guidage en translation de la tige 91 est assurée par les nervures 154 prévues sur le déflecteur 15. Une fois en position sortie, le bouton 9 peut librement pivoter autour de son axe H sur le bras de transmission 14 entre les deux nervures 154 délimitant son débattement angulaire. En pivotant, ce bouton 9 entraîne avec lui la barrette de liaison 7 et les ailettes pivotantes 5. L'opérateur peut alors en le déplaçant pivoter les ailettes pivotantes 5 pour diriger le flux d'air dans la direction souhaitée, de haut en bas ou de droite à gauche selon la disposition dudit barillet. La disposition de l'ailette rideaux 4 la plus proche du bouton 9 peut être telle qu'elle s'ouvre plus rapidement que les autres pour laisser passer ledit bouton 9. Il suffit pour cela de jouer sur l'entraxe entre les points A et B.

Pour revenir à la position fermée du barillet d'aérateur 1 illustrée par la figure 5A, l'opérateur tourne la molette 8 dans le sens inverse. Tous les mouvements s'inversent et l'on obtient la rentrée du bouton 9, puis simultanément la fermeture des ailettes rideaux 4 et du volet d'obturation 3. En aucun cas, l'opérateur peut obtenir ce résultat en appuyant sur le bouton 9 selon la flèche P (cf. Fig. 4). On a vu précédemment qu'une force P sur le bouton 9 génère une force de réaction P1 passant par l'axe de la molette 8 donc annulant un éventuel couple de rotation, grâce au mécanisme de transmission par levier et came.

Il ressort clairement de la description ci-dessus que l'invention permet d'atteindre les buts fixés et d'obtenir un barillet d'aérateur compact, facile à mettre en place, esthétique, fiable et simple à utiliser.

Bien entendu, la présente invention n'est pas limitée à l'exemple de réalisation décrit mais s'étend à toute modification et variante évidente pour un homme du métier. Notamment, la forme, la dimension, la disposition, le nombre des différentes pièces qui composent ledit barillet peuvent varier tout en restant dans l'étendue de la protection définie par les revendications annexées.

## Revendications

1. Barillet d'aérateur (1) pour véhicule automobile comportant au moins un corps (2) creux monté à la sortie d'un conduit d'air et débouchant dans l'habitacle du véhicule pour canaliser un flux d'air, un volet d'obturation (3) dudit flux d'air monté pivotant transversalement dans ledit corps, un jeu d'ailettes rideaux (4) disposé en façade et un jeu d'ailettes pivotantes (5) disposé à l'arrière dudit jeu d'ailettes rideaux et orienté selon un angle différent, chaque jeu d'ailettes étant relié à une barrette de liaison (6, 7) couplée à un dispositif de commande spécifique (8, 9), caractérisé en ce que le dispositif de commande des ailettes pivotantes (5) comporte un bouton (9) associé à la barrette de liaison (7) correspondante et agencé pour avoir deux positions extrêmes, une position rentrée où il est dissimulé par les ailettes rideaux (4) quand elles sont en position fermée et une position sortie où il est saillant par rapport auxdites ailettes rideaux (4) quand elles sont en position ouverte.

2. Barillet selon la revendication 1, caractérisé en ce que le bouton (9) comporte une tige (91) couplée au dispositif de commande (8) des ailettes rideaux (4) au moyen d'un mécanisme de transmission de mouvement (13).

3. Barillet selon la revendication 2, caractérisé en ce que la tige (91) est couplée à la barrette de liaison (7).

4. Barillet selon la revendication 2, caractérisé en ce que le mécanisme de transmission de mouvement (13) comporte une came (12) solidaire en rotation de l'axe (D) du volet d'obturation (3) et couplée au dispositif de commande (8) des ailettes rideaux, ce mécanisme comportant également un bras de transmission (14) solidaire en translation de la tige (91) du bouton, ladite came (12) et ledit bras (14) étant couplés au moyen d'une liaison pivot (121, 141).

5. Barillet selon la revendication 4, caractérisé en ce que le dispositif de commande des ailettes rideaux comporte une molette (8) montée en rotation dans ledit corps (1) et couplée à ladite came (12) par un levier intermédiaire (11).

6. Barillet selon la revendication 5, caractérisé en ce que le levier intermédiaire (11) présente une forme coudée et ses extrémités sont respectivement couplées à la molette (8) et à ladite came (12) au moyen d'une liaison pivot correspondante (83, 113 et 112, 122).

7. Barillet selon la revendication 2, caractérisé en ce qu'il comporte un déflecteur (15) du flux d'air disposé dans ledit corps (1) et pourvu d'un canal de guidage (153) en translation pour ladite tige (91) du bouton (9).

8. Barillet selon la revendication 7, caractérisé en ce que le déflecteur (15) comporte deux nervures (154) disposées symétriquement pour former ledit canal de guidage (153), ce canal comportant un tronçon rectiligne suivi d'un tronçon évasé en V.

9. Barillet selon la revendication 4, caractérisé en ce que la tige (91) du bouton (9) est montée pivotante sur ledit bras de transmission (14).

10. Barillet selon l'une quelconque des revendications 2 à 9, caractérisé en ce que le mécanisme de transmission de mouvement (13) est agencé pour générer une force de réaction (F1) passant par l'axe (C) du dispositif de commande (8) des ailettes rideaux (4) en cas de poussée exercée sur le bouton (9) en position sortie.
